# EUROPEAN PATENT SPECIFICATION

(11) **EP 3 733 611 B1**
(45) Date of publication and mention of the grant of the patent: **02.08.2023**
(21) Application number: 19207911.9
(22) Date of filing: 08.11.2019
(51) Int. Cl.: C02F 1/20, C02F 1/52, C02F 3/28, C02F 11/04, C02F 101/10

(54) **APPARATUS AND METHOD FOR WASTEWATER TREATMENT**
VORRICHTUNG UND VERFAHREN ZUR BEHANDLUNG VON ABWASSER
APPAREIL ET PROCÉDÉ DE TRAITEMENT DES EAUX USÉES

(30) Priority: 03.05.2019 US 201916402468
(43) Date of publication of application: 04.11.2020
(73) Proprietor: Eliquo Stulz GmbH, 79865 Grafenhausen (DE)
(72) Inventor: KNÖRLE, Ulrich, 88289 Waldburg (DE); DITTMANN, Maria, 88214 Ravensburg (DE)
(74) Representative: Plate, Jürgen

(56) References cited:
- DE-A1-102008 050 349
- JP-A- 2011 235 228
- US-A1- 2017 291 816
- US-B1- 8 915 301

## Description

### FIELD OF THE INVENTION

The present invention relates to an apparatus for wastewater treatment, comprising a reactor tank with an inlet and an outlet, a dosing unit for magnesium chloride (MgCl₂) and a degassing unit.

The invention further encompasses a method for wastewater treatment comprising in sequential order
(a) admixing magnesium chloride (MgClz) with the wastewater;
(b) retaining the wastewater in a reactor tank;
(c) degassing the retained wastewater; and
(d) discharging the retained degassed wastewater from the reactor tank.

Hereafter and throughout the present invention wastewater and sewage sludge are subsumed under the term wastewater.

### BACKGROUND OF THE INVENTION

In anaerobic wastewater treatment organic constituents are partly converted to biogas in an oxygen-free environment. Biogas is a mixture of mainly carbon dioxide and methane. Carbon dioxide and to a lesser extent methane are water-soluble. When the solubility limit for carbon dioxide and methane is exceeded gas bubbles are formed. During anaerobic treatment wastewater is mostly saturated or supersaturated with carbon dioxide and methane. A substantial portion of anaerobically treated wastewater is disposed in landfills or incinerated. Prior to disposal or incineration the wastewater is dewatered, preferably by filtration or centrifugation. The thereby exerted shear forces drive out dissolved carbon dioxide and methane and release it into the ambient atmosphere.

Yet another substantial portion of anaerobically treated wastewater is subjected to aerobic treatment in order to metabolize residual organic components. During aerobic treatment wastewater is aerated with ambient air whereby dissolved carbon dioxide and methane are stripped and released into the environment.

The energy content of the thus released methane remains untapped. Furthermore, methane is a greenhouse gas that is about 30 times more potent than carbon dioxide.

The inventive apparatus and method are suited for degassing of liquids such as wastewater and sewage sludge. The metabolism of anaerobic microorganisms which feed on wastewater produces carbon dioxide and methane. Carbon dioxide reduces wastewater pH to values in the range of 6 to 7 which impedes recovery of dissolved phosphorus via precipitation of magnesium ammonium phosphate (MAP, (NH₄)Mg[PO₄]·6H₂O) or so-called struvite. Through extraction of carbon dioxide and a concomitant increase in pH the invention improves the efficiency of MAP precipitation i.e. phosphorus recovery from wastewater. Furthermore, through extraction and storage of methane the invention affords usage of the therein contained energy and reduces methane emissions that otherwise would significantly contribute to the greenhouse effect.

The apparatus and method of the present invention are suitable for treatment of wastewater, untreated sludge, stabilized sewage sludge, digested sludge and sludge centrate. More particularly, the inventive apparatus and method are intended for the treatment of stabilized sewage sludge and digested sludge having a high dry matter content - referred to here and hereinafter as DM - of up to 7%.

Phosphorus is one of the resources forecast to become scarce in the foreseeable future. This has been acknowledged by the German Federal Government, which stipulated in its coalition agreement that: "The protection of water bodies from nutrient inputs and pollutants is to be enhanced and put in a legal framework such that undesirable trends are corrected. We will end the deployment of sewage sludge for fertilization purposes and recover phosphorus and other nutrients." (Christian Democratic Union Germany, 2013). Phosphorus recovery is indeed justified in view of estimated world reserves of 50 billion tonnes in 1979 which based on 2012 projections correspond to merely about 100 years availability (Ehbrecht, Fuderer, Schönauer, & Schuhmann, 2012).

In the municipal and industrial sector phosphorus may be recovered from sewage either from an aqueous phase, from sludge or from ashes after sewage sludge incineration. The apparatus and method of the present invention support phosphorus recovery from the aqueous phase as well as from sludge through magnesium ammonium phosphate (MAP, struvite) precipitation.

Devices and methods for the extraction of phosphorus from wastewater are known in the prior art.

Often MAP crystallization is promoted using sand or other minerals (CRYSTALACTOR^{®} process). In the P-RoC process (DE102011016826A1), phosphate-containing mineral phases are crystallized on the surface of porous calcium silicate hydrate (CSH) substrates as crystallization substrate. The phosphorus present in the substrate is recovered in the form of calcium phosphate.

EP1496019A1 discloses a method and an apparatus for the recovery of phosphate in the form of MAP crystals from wastewater, in which the wastewater contains high concentrations of organic matter, phosphorus and nitrogen. This treatment process includes the biological treatment of a sludge/water mixture, wherein MAP crystals are formed with simultaneous dosage of a magnesium containing reagent and induced to grow. After the MAP crystals have been separated from the reactor circulation, at least a portion of the sludge is returned back to the reactor. In parallel with phosphorus recovery this method also reduces the organic burden.

WO2014/003554A1 teaches an anaerobic reactor for production and harvesting of struvite with inlets arranged at the top of the reactor and an outlet at the base, wherein the inlets are configured such that a rotary movement of the reactor contents is generated as the reactor is charged, and the struvite formed is moved toward the outlet by means of scrapers at the base. EP 1786733B1 also teaches a method which, as well as the recovery of phosphorus, has the aim of degrading the organic burden. In this method, the process proceeds under aerobic conditions, with minimization of the growth of nitrifying bacteria through the choice of a suitable hydraulic retention time, in order thus to have the ammonium co-reactant required for the crystallization of magnesium ammonium phosphate available in a sufficient concentration or not to utilize it in any other way.

WO2008/115758A1 discloses a method for the removal of phosphorus and ammonium from an aqueous stream. The phosphorus-containing aqueous stream is contacted with alkali and magnesium in two to five stages connected in series, and the precipitation of struvite is thus initiated. The struvite is drawn off at the base of each stage and introduced into the preceding stage. The phosphorus-containing aqueous stream is conducted from the first to the last stage in countercurrent. The individual stages feature a rising pH compared to the preceding stage, the pH being increased by the metered addition of alkali.

DE102007035910B4 discloses a method and an apparatus for recovery of magnesium ammonium phosphate in sewage sludge treatment. The apparatus consists of a reaction vessel into which digested sludge is introduced, and the latter is mixed with air. Addition of magnesium chloride initiates the precipitation of magnesium ammonium phosphate. The introduction of air firstly strips out the CO₂ dissolved in the digested sludge and thus raises the pH. It is known that the precipitation reaction proceeds more readily at higher pH values. At the same time, the introduction of air creates characteristic flow conditions which enable collection of the heavy MAP particles in a calming zone, from which they can be removed from the system.

DE102011112780A1 discloses a method of treatment of sewage sludge having the treatment steps of hydrolysis of the sewage sludge and the digestion of the hydrolysed sewage sludge that has been subjected to the hydrolysis for anaerobic treatment of the sewage sludge, and having a step of separation of phosphate from the at least partly treated sewage sludge. The separation of phosphate follows the treatment step of hydrolysis and precedes the treatment step of digestion of the hydrolysed sewage sludge, and the sewage sludge having a phosphate content reduced by the separation of phosphate is sent to the anaerobic treatment by digestion.

WO 2005/077834 A describes a fluidized bed reactor for wastewater, comprising a reaction tank having three or more regions arranged one on top of another, the cross-sectional area of which increases from the bottom upward, a recirculation loop and a control system for the regulation of the chemical saturation conditions in the lower region of the reaction tank.

WO 2012/119260 A1 relates to a system for the treatment of wastewater having a reactor tank having three or more regions arranged one on top of another, wherein the cross-sectional area of the regions increases from the bottom upward, and wastewater is supplied in a lower region and is recirculated in the reactor tank.

JP H11-290863 A discloses an apparatus for the separation of phosphorus from wastewater having a reactor tank for the precipitation of MAP crystals (magnesium ammonium phosphate crystals), wherein an image sensor, especially a CCD camera, disposed in the reactor tank is used to determine the size and suspension of MAP crystals.

US 2017/0291816 A1 pertains to an apparatus and method for extraction of phosphorus from wastewater that employ a precipitation and retention module. Before entering the precipitation module the wastewater is degassed in a reduced pressure vessel.

DE 10 2008 050 349 A1 discloses a method and apparatus for phosphorus recovery from wastewater comprising stripping of carbon dioxide through aeration, admixing of magnesium chloride and continuous precipitation.

US 8,915,301 B1 relates to methods for treating saline streams through multiple treatment cycles comprising admixing of solvents, pressurization, precipitation and recovery.

JP 2011/235228 A describes a method and apparatus for wastewater treatment wherein ammonia gas is extracted from digestive fluid into a phosphoric acid-containing water storage tank held under reduced pressure of 50 kPa or less and therein reacted with phosphate containing water and a magnesium compound.

The known devices and methods have one or more of the following drawbacks:
- high methane emissions;
- necessity to use large reactor tank volumes for sufficiently long hydraulic retention time to enable adequate MAP crystal growth;
- excessive struvite scaling downstream from the reactor and concomitant maintenance;
- limitation to treatment of wastewater having a low dry matter content DM < 3%, particularly sludge centrate;
- use of maintenance-intensive hydraulic components such as weirs, rotors and cyclones;
- restrictions in the choice of operating parameters;
- low energy efficiency.

### SUMMARY OF ADVANTAGEOUS EMBODIMENTS OF THE INVENTION

The present invention has the object to overcome the above-mentioned disadvantages and to provide a robust and low-maintenance apparatus for energy efficient phosphorus extraction from wastewater and reduced methane emission.

This object is achieved by an apparatus for wastewater treatment, comprising a reactor tank with an inlet and an outlet, a dosing unit for magnesium chloride (MgClz) and a degassing unit, wherein the dosing unit and the degassing unit are each connected or attached to the reactor tank. The apparatus of the invention is further described in claim 1.

### BRIEF DESCRIPTION OF THE DRAWING

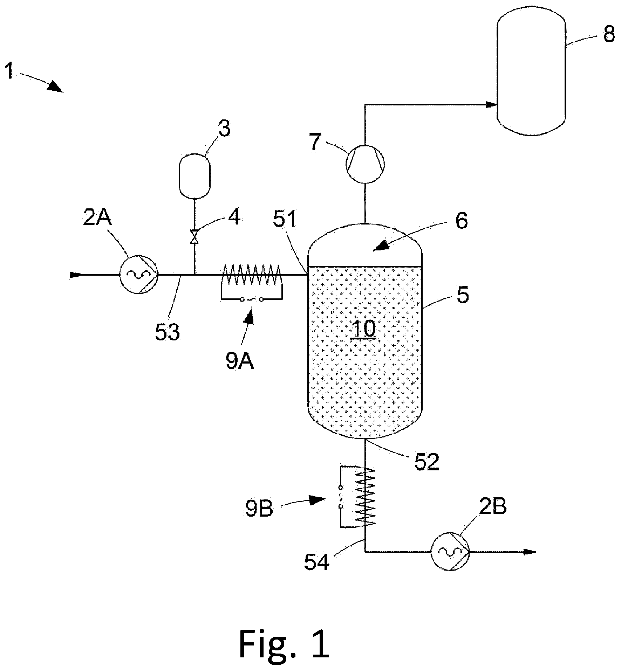

Figure 1 is a schematic illustration of an exemplary inventive apparatus for wastewater treatment.

### DETAILED DESCRIPTION OF ADVANTAGEOUS EMBODIMENTS OF THE INVENTION

Advantageous embodiments of the invention are characterized by the independent selection of any one or more of:
- the inlet is arranged in an upper portion of the reactor tank;
- the outlet is arranged in a lower portion of the reactor tank;
- the apparatus comprises an outlet duct connected to the reactor tank outlet;
- the inlet duct is equipped with a first fluid pump;
- the first fluid pump is a progressive cavity pump;
- the first fluid pump is a rotary piston pump;
- the inlet duct is equipped with a first control valve;
- the outlet duct is equipped with a second fluid pump;
- the second fluid pump is a progressive cavity pump;
- the second fluid pump is a rotary piston pump;
- the outlet duct is equipped with a second control valve;
- the inlet duct is equipped with a first electromagnetic descaling unit;
- the outlet duct is equipped with a second electromagnetic descaling unit;
- the at least one electromagnetic descaling unit comprises one or more electromagnetic inductors each connected to an alternating current electric power supply;
- the at least one electromagnetic inductor is an electric coil;
- at least one part of the inlet duct comprises or consists of a dielectric material, preferably a polymeric material;
- at least one part of the outlet duct comprises or consists of a dielectric material, preferably a polymeric material;
- the at least one electromagnetic inductor is an electric coil wound around at least a part of the inlet duct;
- the at least one electromagnetic inductor is an electric coil wound around at least a part of the outlet duct;
- the reactor tank has a volume of 0.1 to 10 m³;
- the reactor tank has a volume of 0.1 to 2 m³, 1 to 3 m³, 2 to 4 m³, 3 to 5 m³, 4 to 6 m³, 5 to 7 m³, 6 to 8 m³, 7 to 9 m³ or 8 to 10 m³;
- the apparatus is configured for a hydraulic retention time of wastewater within the reactor tank of 10 seconds to 20 minutes;
- the apparatus is configured for maintaining a headspace in the reactor tank at an absolute pressure of 5 to 15 kPa, 10 to 20 kPa, 15 to 25 kPa, 20 to 30 kPa, 25 to 35 kPa or 30 to 40 kPa;
- the apparatus is configured for wastewater retention within the reactor tank under conditions where a headspace exposed surface A and a volume V of the retained wastewater fulfill the relation: 1.1 ≤ A / V^{2/3} ≤ 4.2 ;
- the apparatus is configured for wastewater retention within the reactor tank under conditions where a headspace exposed surface A and a volume V of the retained wastewater fulfill the relation: 1.1 ≤ A / V^{2/3} ≤ 2.7 or 2.6 ≤ A / V^{2/3} ≤ 4.2 ;
- the apparatus is configured for wastewater retention within the reactor tank under conditions where a headspace exposed surface A and a volume V of the retained wastewater fulfill the relation: 1.1 ≤ A / V^{2/3} < 1.5; 1.3 ≤ A/V^{2/3} ≤ 1.7; 1.5 ≤ A/V^{2/3} ≤ 1.9; 1.7 ≤ A/V^{2/3} ≤ 2.1; 1.9 ≤ A/V^{2/3} ≤ 2.3; 2.1 ≤ A/V^{2/3} ≤ 2.5; 2.3 ≤ A/V^{2/3} ≤ 2.7; 2.5 ≤ A/V^{2/3} ≤ 2.9; 2.7 ≤ A/V^{2/3} ≤ 3.1; 2.9 ≤ A/V^{2/3} ≤ 3.3; 3.1 ≤ A/V^{2/3} ≤ 3.5; 3.3 ≤ A/V^{2/3} ≤ 3.7; 3.5 ≤ A/V^{2/3} ≤ 3.9 or 3.7 ≤ A/V^{2/3} ≤ 4.2;
- the degassing unit comprises an optional gas storage tank for exhaust gas;
- the dosing unit comprises a fluid storage tank for an aqueous magnesium chloride (MgCl₂) solution;
- the dosing unit comprises one or more dosing pumps;
- the dosing unit comprises one or more fluid metering valves;
- the apparatus comprises one or more optional actuators selected from dosing pumps, metering valves, control valves, fluid pumps, vacuum pumps and gas compressors;
- the apparatus comprises one or more optional sensors, selected from gas pressure sensors, fluid flow sensors, fluid pressure sensors, liquid conductivity sensors, ion sensitive electrodes, magnesium ion sensitive electrodes, chlorine ion sensitive electrodes and pH-sensors;
- the apparatus comprises one or more optional sensors configured to output an electrical signal;
- the apparatus comprises an optional programmable logic controller (PLC);
- the optional programmable logic controller (PLC) is equipped and configured to store and execute a control program;
- the optional programmable logic controller (PLC) comprises a control program;
- the apparatus optionally comprises one or more actuators connected to the programmable logic controller (PLC);
- the apparatus optionally comprises one or more sensors connected to the programmable logic controller (PLC); and/or
- the optional programmable logic controller (PLC) comprises a control program configured to adapt the output of one or more actuators in response to the output signals of one or more sensors.

The present invention further aims at providing a method for energy efficient phosphorus extraction from wastewater with reduced methane emission.

The foregoing object is achieved by a method for wastewater treatment, comprising in sequential order
(a) admixing magnesium chloride (MgClz) with the wastewater;
(b) retaining the wastewater in a reactor tank;
(c) degassing the retained wastewater; and
(d) discharging the retained degassed wastewater from the reactor tank.

The method of the invention is further described in claim 6.

Advantageous embodiments of the inventive method are characterized by the independent selection of any one or more of:
- the wastewater hydraulic retention time in the reactor tank is from 10 seconds to 20 minutes; such as from 30 seconds to 15 minutes, particularly from 1 minute to 10 minutes;
- the wastewater hydraulic retention time in the reactor tank is from 10 seconds to 2 minutes, 1 to 3 minutes, 2 to 4 minutes, 3 to 5 minutes, 4 to 6 minutes, 5 to 7 minutes, 6 to 8 minutes, 7 to 9 minutes, 8 to 10 minutes, 9 to 11 minutes, 10 to 12 minutes, 11 to 13 minutes, 12 to 14 minutes, 13 to 15 minutes, 14 to 16 minutes, 15 to 17 minutes, 16 to 18 minutes, 17 to 19 minutes or 18 to 20 minutes;
- magnesium chloride (MgClz) is admixed to the wastewater at a concentration of 0.1 to 10 kilograms MgCl₂ per m³ wastewater;
- magnesium chloride (MgClz) is admixed to the wastewater at a concentration of 0.1 to 0.3 kg/m³, 0.2 to 0.4 kg/m³, 0.3 to 0.5 kg/m³, 0.4 to 0.6 kg/m³, 0.5 to 0.7 kg/m³, 0.6 to 0.8 kg/m³, 0.7 to 0.9 kg/m³, 0.8 to 1.0 kg/m³ or 0.9 to 1.1 kg/m³;
- magnesium chloride (MgClz) is admixed to the wastewater at a concentration of 1 to 3 kg/m³, 2 to 4 kg/m³, 3 to 5 kg/m³, 4 to 6 kg/m³, 5 to 7 kg/m³, 6 to 8 kg/m³, 7 to 9 kg/m³ or 8 to 10 kg/m³;
- the wastewater is degassed by maintaining a headspace in the reactor tank at an absolute pressure of 10 to 30 kPa;
- the wastewater is degassed by maintaining a headspace in the reactor tank at an absolute pressure of 5 to 15 kPa, 10 to 20 kPa, 15 to 25 kPa, 20 to 30 kPa, 25 to 35 kPa or 30 to 40 kPa;
- a headspace exposed surface A and a volume V of the wastewater retained in the reactor tank fulfill the relation: 1.1 ≤ A/V^{2/3} ≤ 4.2 ;
- a headspace exposed surface A and a volume V of the wastewater retained in the reactor tank fulfill the relation: 1.1 ≤ A/V^{2/3} ≤ 2.7 or 2.6 ≤ A/V^{2/3} ≤ 4.2 ;
- a headspace exposed surface A and a volume V of the wastewater retained in the reactor tank fulfill the relation: 1.1 ≤ A/V^{2/3} ≤ 1.5; 1.3 ≤ A/V^{2/3} ≤ 1.7; , 1.5 ≤ A/V^{2/3} ≤ 1.9; 1.7 ≤ A/V^{2/3} ≤ 2.1; 1.9 ≤ A/V^{2/3} ≤ 2.3; 2.1 ≤ A/V^{2/3} ≤ 2.5; 2.3 ≤ A/V^{2/3} ≤ 2.7; 2.5 ≤ A/V^{2/3} ≤ 2.9; 2.7 ≤ A/V^{2/3} ≤ 3.1; 2.9 ≤ A/V^{2/3} ≤ 3.3; 3.1 ≤ A/V^{2/3} ≤ 3.5; 3.3 ≤ A/V^{2/3} ≤ 3.7; 3.5 ≤ A/V^{2/3} ≤ 3.9 or 3.7 ≤ A/V^{2/3} ≤ 4.2;
- the content of phosphorus present in the aqueous phase of the wastewater is reduced to 1 to 20% of the phosphorus content present in the aqueous phase of the untreated wastewater;
- the content of phosphorus present in the aqueous phase of the wastewater is reduced to 1 to 3 %, 2 to 4 %, 3 to 5 %, 4 to 6 %, 5 to 7 %, 6 to 8 %, 7 to 9 %, 8 to 10 %, 9 to 11 %, 10 to 12 %, 11 to 13 %, 12 to 14 %, 13 to 15 %, 14 to 16 %, 15 to 17 %, 16 to 18 %, 17 to 19% or 18 to 20 % of the phosphorus content present in the aqueous phase of the untreated wastewater; and/or
- gas is extracted from the wastewater and optionally stored for subsequent use.

The inventors have surprisingly found that addition of magnesium chloride (MgClz) prior to degassing increases the amount of carbon dioxide and methane that can be extracted per unit volume of wastewater. The cause for higher gas release has not yet been elucidated. However, it is hypothesized that it is attributable to MgCl₂ induced plasmolysis of anaerobic bacteria (cf. https://en.wikipedia.org/wiki/Plasmolysis). Also the so-called "desalting" effect may increase gas release to a minor extent.

Based on the finding of MgCl₂ enhanced biogas release, a highly effective apparatus and method for raising the pH-value of wastewater and concomitantly improving MAP (i.e. phosphorus) and methane recovery is devised in the present invention.

In general, communal wastewater, agricultural wastewater and liquid manure from animal farming is first freed of coarse particulate ingredients by mechanical means, such as rakes, metallic filter grids and/or a sand trap. Subsequently, the mechanically clarified wastewater is sent to an aerobic clarifier and subjected to biological conversion over a period of time of a few hours up to a few days. The sewage sludge (untreated sludge) obtained after aerobic treatment is digested in a digestion tower and is then referred to as anaerobic stabilized sewage sludge, or as digested sludge. Mechanical overflow and filter apparatuses, presses or centrifuges, optionally in conjunction with thermal breakdown are used to separate stabilized sewage sludge and digested sludge into a thickened sludge component and a component having a low dry matter content of DM ≤ 0.5%, called the sludge centrate.

The dry matter content DM of wastewater, untreated sludge, sewage sludge, digested sludge or sludge centrate is determined by the Deutsche Einheitsverfahren zur Wasser-, Abwasser-und Schlammuntersuchung [German standard methods for analysis of water, wastewater and sludge]. Alternatively, the dry matter content DM of wastewater, untreated sludge, sewage sludge, digested sludge or sludge centrate can be determined by:
- taking a sample of a given volume (for example 100 ml) and weighing it on an analytical balance, defining the weight of the sample as ms (unit [mg]);
- weighing a clean filter stored in a drying cabinet and a desiccator on an analytical balance, defining the weight of the clean filter as m_{F} (unit [mg]);
- filtering the sample through the filter and drying the filter in a microwave or a drying cabinet or by means of infrared light;
- weighing the filter again, defining the weight of the filter with the dry matter deposited thereon as m_{FT} (units [mg]);
- calculating the dry matter content DM in units of % from the ratio (m_{FT} - m_{F})/m_{S} multiplied by a factor of 100.

In the context of the present invention:
- wastewater, untreated sludge, stabilized sewage sludge, digested sludge and sludge centrate are subsumed under the term "wastewater";
- the term "hydraulic retention time" refers to the ratio of the volume of a vessel - for example in units of m³ - wherein wastewater is transiently retained to the volume flow rate (dV/dt) of the wastewater through the vessel - for example in the unit m³/h; rather than "hydraulic retention time", skilled persons also use the terms "retention time", "detention time" or "residence time";
- the terms "phosphorus-containing precipitate" and "precipitate" refer to a mixture of phosphorus-containing crystals, for example struvite (also referred to as MAP), other precipitates and "wastewater"; more particularly, the terms "phosphorus-containing precipitate" and "precipitate" refer to sediment formed in the reactor tank.

The invention is further elucidated with reference to Figure 1 schematically showing an exemplary apparatus **1** for wastewater treatment comprising a reactor tank **5** having an inlet **51** and an outlet **52.** Wastewater **10** retained in reactor tank **5** is degassed via a headspace **6** held at an absolute pressure from 5 to 40 kPa. Headspace **6** is maintained by a degassing unit comprising a vacuum pump or gas compressor **7** connected to an upper portion of rector tank **5.** In an expedient embodiment the outlet of the vacuum pump or gas compressor **7** is connected to an optional gas storage tank **8.** The optional gas storage tank **8** serves as container for gas withdrawn from wastewater **10** via headspace **6** and the vacuum pump or gas compressor **7.** An inlet duct **53** for raw wastewater and an outlet duct **54** for treated wastewater are connected to inlet **51** and outlet **52,** respectively. Inlet duct **53** is equipped with a first fluid pump **2A** and a first electromagnetic descaling unit **9A.** A fluid storage tank **3** containing an aqueous MgClz solution is connected to inlet duct **53** via a metering valve **4.** Outlet duct **54** is equipped with a second fluid pump **2B** and a second electromagnetic descaling unit **9B.** Preferably, first fluid pump **2A** and/or second fluid pump **2B** are configured as progressive cavity pump or rotating piston pump.

The inventive apparatus and methods allow greater than 90% recovery of MAP, such as greater than 96 % recovery of MAP (based on weight) from the incoming waste stream. Such elevated phosphorus recovery has eliminated the need for multiple reactor and/or retention tanks, as was heretofore known in the art. In fact, Applicants have found that for the inventive process (e.g. a process in which magnesium chloride or other precipitant is admixed with the wastewater prior to the degassing step) longer retention times (i.e. conventional retention times known in the prior art) re-dissolve the phosphorus-containing crystals so that it can no longer be precipitated. The inventive processes thus allow for shorter retention times than heretofore known. Consequently, in expedient embodiments the inventive apparatus includes a single wastewater tank, i.e. the reactor unit. The inventive apparatus thus have a far smaller footprint (i.e. takes up less physical space) than heretofore known, such as a footprint that is 25 to 50% smaller than conventional wastewater treatment apparatus.

Embodiments of the inventive apparatus are not restricted to the configuration shown in Figure 1. Rather, the invention encompasses embodiments consisting of various combinations of components in accord with the preceding description, as long as they fall within the scope of the claims.

Furthermore, the phosphorus-containing precipitate (i.e. the reactor tank sediment) may be recovered or separated from the degassed wastewater (e.g recovered from the retained degassed wastewater in the reactor tank) by any means and/or method known in the art, such as filtration, transfer to a separate settling tank, introduction into a calming zone or the like. The phosphorous-containing crystals (e.g. MAP precipitation) may then likewise be removed from the recovered sediment by any means and/or method known in the art, such as filtration and the like.

### List of reference symbols

- 1: apparatus for wastewater treatment
- 2A: first fluid pump
- 2B: second fluid pump
- 3: fluid storage tank for aqueous MgCl₂ solution
- 4: metering valve
- 5: reactor tank
- 6: headspace (inside of reactor tank 5)
- 7: vacuum pump
- 8: optional storage tank for exhaust gas
- 9A: first electromagnetic descaling unit
- 9B: second electromagnetic descaling unit
- 10: wastewater (or sewage sludge)
- 51: reactor tank inlet
- 52: reactor tank outlet
- 53: inlet duct
- 54: outlet duct

## Claims

1. An apparatus (1) for wastewater (10) treatment and phosphorus recovery through magnesium ammonium phosphate precipitation, comprising a reactor tank (5) for wastewater retention with an inlet (51) and an outlet (52), a dosing unit (3, 4) for magnesium chloride (MgClz) and a degassing unit (6, 7), wherein the dosing unit (3, 4) and the degassing unit (6, 7) are each connected or attached to the reactor tank (5), the apparatus (1) comprises an inlet duct (53) connected to the reactor tank inlet (51) and the dosing unit (3, 4) is connected to the inlet duct (53), the degassing unit (6, 7) comprises a vacuum pump (7) and the apparatus (1) is configured for maintaining a headspace (6) in the reactor tank (5) at an absolute pressure of 5 to 40 kPa.

2. The apparatus (1) of claim 1, wherein inlet duct (53) is equipped with a first electromagnetic descaling unit (9A).

3. The apparatus (1) of claim 1 or 2, wherein said apparatus (1) further comprises an outlet duct (54) equipped with a second electromagnetic descaling unit (9B).

4. The apparatus (1) of any one of claims 1 to 3, wherein said apparatus (1) comprises one or more actuators and/or sensors selected from dosing pumps, metering valves, control valves, fluid pumps, vacuum pumps, gas compressors, gas pressure sensors, fluid flow sensors, fluid pressure sensors, liquid conductivity sensors, ion sensitive electrodes, magnesium ion sensitive electrodes, chlorine ion sensitive electrodes and pH-sensors.

5. The apparatus (1) of any one of claims 1 to 4, wherein said apparatus further comprises a programmable logic controller (PLC).

6. Method for wastewater (10) treatment and phosphorus recovery through magnesium ammonium phosphate precipitation, comprising in sequential order
(a) admixing magnesium chloride (MgClz) with the wastewater (10);
(b) retaining the wastewater (10) in a reactor tank (5);
(c) degassing the retained wastewater (10) by maintaining a headspace (6) in the reactor tank (5) at an absolute pressure of 5 to 40 kPa; and
(d) discharging the retained degassed wastewater (10) from the reactor tank (5).

7. The method of claim 6, wherein the wastewater (10) hydraulic retention time in the reactor tank (5) is from 10 seconds to 20 minutes.

8. The method of claim 6 or 7, wherein the magnesium chloride (MgClz) is admixed to the wastewater (10) at a concentration of 0.1 to 10 kilograms MgCl₂ per m³ wastewater (10).

## Patentansprüche

1. Vorrichtung (1) zur Abwasserbehandlung (10) und Phosphorrückgewinnung durch Magnesium-Ammoniumphosphat-Fällung, umfassend einen Reaktortank (5) zur Abwasserrückhaltung mit einem Zulauf (51) und einem Ablauf (52), eine Dosiereinheit (3, 4) für Magnesiumchlorid (MgCl₂) und eine Entgasungseinheit (6, 7), wobei die Dosiereinheit (3, 4) und die Entgasungseinheit (6, 7) jeweils mit dem Reaktortank (5) verbunden oder daran befestigt sind, die Vorrichtung (1) eine Einlassleitung (53) umfasst, die mit dem Reaktortankeinlass (51) verbunden ist und die Dosiereinheit (3, 4) mit der Einlassleitung (53) verbunden ist, die Entgasungseinheit (6, 7) eine Vakuumpumpe (7) umfasst und die Vorrichtung (1) dafür konfiguriert ist, im Reaktortank (5) einen Kopfraum (6) mit einem absoluten Druck von 5 bis 40 kPa aufrecht zu halten.

2. Die Vorrichtung (1) nach Anspruch 1, wobei die Einlassleitung (53) mit einer ersten elektromagnetischen Entkalkungseinheit (9A) ausgerüstet ist.

3. Die Vorrichtung (1) nach Anspruch 1 oder 2, wobei die besagte Vorrichtung (1) eine Auslassleitung (54) umfasst, die mit einer zweiten elektromagnetischen Entkalkungsvorrichtung (9B) ausgerüstete ist.

4. Vorrichtung (1) nach einem der Ansprüche 1 bis 3, wobei die Vorrichtung (1) einen oder mehrere Aktoren und/oder Sensoren, gewählt aus Dosierpumpen, Dosierventilen, Steuerventilen, Flüssigkeitspumpen, Vakuumpumpen, Gaskompressoren, Gasdrucksensoren, Flüssigkeitsdurchflusssensoren, Flüssigkeitsdrucksensoren, Flüssigkeitsleitfähigkeitssensoren, ionenempfindlichen Elektroden, Magnesiumionenempfindlichen Elektroden, Chlor-ionenempfindlichen Elektroden und pH-Sensoren, umfasst.

5. Die Vorrichtung (1) nach einem der Ansprüche 1 bis 4, wobei die Vorrichtung zudem eine programmierbare Logiksteuerung (PLC) umfasst.

6. Verfahren zur Abwasserbehandlung (10) und Phosphorrückgewinnung durch Magnesium-Ammoniumphosphat-Fällung, umfassend in sequenzieller Folge
(a) Zumischen von Magnesiumchlorid (MgCl₂) in das Abwasser (10);
(b) Rückhalten des Abwassers (10) in einem Reaktortank (5);
(c) Entgasen des zurückgehaltenen Abwassers (10), indem ein Kopfraum (6) im Reaktortank (5) auf einem absoluten Druck von 5 bis 40 kPa gehalten wird; und
(d) Ablassen des zurückgehaltenen entgasten Abwassers (10) aus dem Reaktortank (5).

7. Verfahren nach Anspruch 6, wobei die hydraulische Verweilzeit des Abwassers (10) im Reaktortank (5) 10 Sekunden bis 20 Minuten beträgt.

8. Verfahren nach Anspruch 6 oder 7, wobei das Magnesiumchlorid (MgCl₂) dem Abwasser (10) in einer Konzentration von 0,1 bis 10 Kilogramm MgCl₂ pro m³ Abwasser (10) zugemischt wird.

## Revendications

1. Appareil (1) pour le traitement des eaux usées (10) et la récupération de phosphore par précipitation de phosphate d'ammonium et de magnésium, comprenant un réservoir de réacteur (5) pour la rétention des eaux usées avec une entrée (51) et une sortie (52), une unité de dosage (3, 4) pour le chlorure de magnésium (MgCl₂) et une unité de dégazage (6, 7), dans lequel l'unité de dosage (3, 4) et l'unité de dégazage (6, 7) sont chacune connectées ou attachées au réservoir de réacteur (5), l'appareil (1) comprend un conduit d'entrée (53) connecté à l'entrée de réservoir de réacteur (51) et l'unité de dosage (3, 4) est connectée au conduit d'entrée (53), l'unité de dégazage (6, 7) comprend une pompe à vide (7) et l'appareil (1) est configuré pour maintenir un espace de tête (6) dans le réservoir de réacteur (5) à une pression absolue de 5 à 40 kPa.

2. Appareil (1) selon la revendication 1, dans lequel le conduit d'entrée (53) est équipé d'une première unité de détartrage électromagnétique (9A).

3. Appareil (1) selon la revendication 1 ou 2, dans lequel ledit appareil (1) comprend en outre un conduit de sortie (54) équipé d'une seconde unité de détartrage électromagnétique (9B).

4. Appareil (1) selon l'une quelconque des revendications 1 à 3, dans lequel ledit appareil (1) comprend un ou plusieurs actionneurs et/ou capteurs choisis parmi les pompes doseuses, les vannes de dosage, les vannes de contrôle, les pompes à fluide, les pompes à vide, les compresseurs de gaz, les capteurs de pression de gaz, les capteurs d'écoulement de fluide, les capteurs de pression de fluide, les capteurs de conductivité de liquide, les électrodes sensibles aux ions, les électrodes sensibles aux ions magnésium, les électrodes sensibles aux ions chlore et les capteurs de pH.

5. Appareil (1) selon l'une quelconque des revendications 1 à 4, dans lequel ledit appareil comprend en outre un contrôleur logique programmable (PLC).

6. Procédé pour le traitement des eaux usées (10) et la récupération de phosphore par précipitation de phosphate d'ammonium et de magnésium, comprenant dans l'ordre séquentiel
(a) en mélangeant du chlorure de magnésium (MgCl₂) avec les eaux usées (10) ;
(b) retenir les eaux usées (10) dans un réservoir de réacteur (5) ;
(c) dégazer les eaux usées retenues (10) en maintenant un espace de tête (6) dans le réservoir de réacteur (5) à une pression absolue de 5 à 40 kPa ; et
(d) décharger l'eau usée dégazée retenue (10) du réservoir de réacteur (5).

7. Procédé selon la revendication 6, dans lequel le temps de rétention hydraulique des eaux usées (10) dans le réservoir de réacteur (5) est de 10 secondes à 20 minutes.

8. Procédé selon la revendication 6 ou 7, dans lequel le chlorure de magnésium (MgCl₂) est mélangé aux eaux usées (10) à une concentration de 0,1 à 10 kilogrammes de MgCl₂ par m³ d'eaux usées (10).
